Europäisches Patentamt

European Patent Office

Office européen des brevets

(11) Veröffentlichungsnummer: **0 411 374 A1**

# (12) EUROPÄISCHE PATENTANMELDUNG

(21) Anmeldenummer: 90113562.4

(22) Anmeldetag: 16.07.90

(51) Int. Cl.5: **H01M 8/02**, //C22C38/18, C22C19/05

(30) Priorität: 31.07.89 CH 2836/89

(43) Veröffentlichungstag der Anmeldung: 06.02.91 Patentblatt 91/06

(84) Benannte Vertragsstaaten: CH DE FR GB IT LI NL SE

(71) Anmelder: ASEA BROWN BOVERI AG Haselstrasse CH-5401 Baden(CH)

(72) Erfinder: Nazmy, Mohamed, Dr. Zelglistrasse 30 D-5442 Fislisbach(CH)

(54) Bauelement zur Stromübertragung für keramische Hochtemperaturbrennstoffzellen.

(57) Bauelement (1) zur Stromübertragung zwischen benachbarten ebenen, stapelförmig angeordneten Hochtemperatur-Brennstoffzellen mit Feststoffelektrolyt aus einem die geometrische Form bestimmenden Träger (3) aus einer oxydationsbeständigen Hochtemperaturlegierung und zahlreichen mit diesem fest verbunden elektrischen Kontakt zum benachbarten Bauteil gewährleistenden Kontaktpfropfen (4) aus einem Edelmetall ausgewählt aus Au, Pd, Pt oder einer Legierung dieser Elemente. Ausführungsform der Bauelemete (1) als Stromkollektor oder als Bipolarplatte.

FIG.1

EP 0 411 374 A1

# BAUELEMENT ZUR STROMÜBERTRAGUNG FÜR KERAMISCHE HOCHTEMPERATUR-BRENNSTOFFZELLEN

## Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung ein Bauelement zur Stromübertragung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

## Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von stromführenden Grund-Baulementen und deren opti male gegenseitige Anordnung basierend auf keramischen Hochtemperatur-Brennstoffzellen.

Zum Stand der Technik werden die nachfolgenden Druckschriften genannt:
- O. Antonsen, W. Baukal und W. Fischer, "Hochtemperatur-Brennstoffbatterie mit keramischem Elektrolyten", Brown Boveri Mitteilungen Januar/Februar 1966, Seiten 21 - 30,
- US-A- 4 692 274
- US-A- 4 395 468
- W.J. Dollard und W.G. Parker, "An overview of the Westinghouse Electric Corporation solid oxide fuel cell program", Extended Abstracts, Fuel Cell Technology and Applications, International Seminar, Den Haag, Niederlande, 26. bis 29. Oktober 1987.
- F.J. Rohr, High-Temperature Fuel Cells, Solid Electrolytes, 1978 by Academic Press, Inc., Seite 431 ff.
- D.C. Fee et al., Monolithic Fuel Cell Development, Argonne National Laboratory, Paper presented at the 1986 Fuel Cell Seminat, Oct. 26 - 29, 1986 Tucson, AZ, U.S. Department of Energy, The University of Chicago.

## Darstellung der Erfindung

Der Erfindung liegt die Aufgabe zugrunde, ein Bauelement zur Stromführung zwischen benachbarten ebenen, stapelförmig angeordneten Hochtemperatur-Brennstoffzellen anzugeben, welches einerseits einen guten elektrischen Kontakt sowohl zu den Elektroden der Brennstoffzelle wie zu den Bauteilen unter sich bei Temperaturen bis zu 1000°C gewährleistet, seinerseits eine hohe metallische elektrische Leitfähigkeit besitzt und sowohl in reduzierender, neutraler wie in oxydierender Atmosphäre eingesetzt werden kann und eine hinreichende Langzeitstabilität aufweist. Das Bauelement soll kostengünstig, reproduzierbar und auswechselbar hergestellt werden können.

Diese Aufgabe wird dadurch gelöst, dass das eingangs erwähnte Bauelement aus einem die geometrische Form bestimmenden Träger aus einer elektrisch leitenden oxydationsbeständigen Hochtemperaturlegierung ausgewählt aus einer Eisenbasis- oder Nickelbasislegierung und zahlreichen, mit letzterem fest verbundenen, elektrisch leitenden, den elektrischen Kontakt zum benachbarten Bauteil gewährleistenden Kontaktpfropfen aus einem Edelmetall ausgewählt aus den Elementen Au, Pd, Pt oder einer beliebigen Legierung mindestens zweier dieser Elemente besteht.

Weg zur Ausführung der Erfindung:

Die Erfindung wird anhand der nachfolgenden, durch Figuren näher erläuterten Ausführungsbeispiele beschrieben.

Dabei zeigt:

Fig. 1 einen Längsschnitt durch einen Stromkollektor in Form eines Kontaktfingers,

Fig. 2 einen Längsschnitt durch einen Stromkollektor in Form eines gewellten Bandes,

Fig. 3 einen Längsschnitt durch eine Bipolarplatte in Form eines Blechkörpers,

Fig. 4 einen Längsschnitt durch eine Bipolarplatte in Form eines Presskörpers.

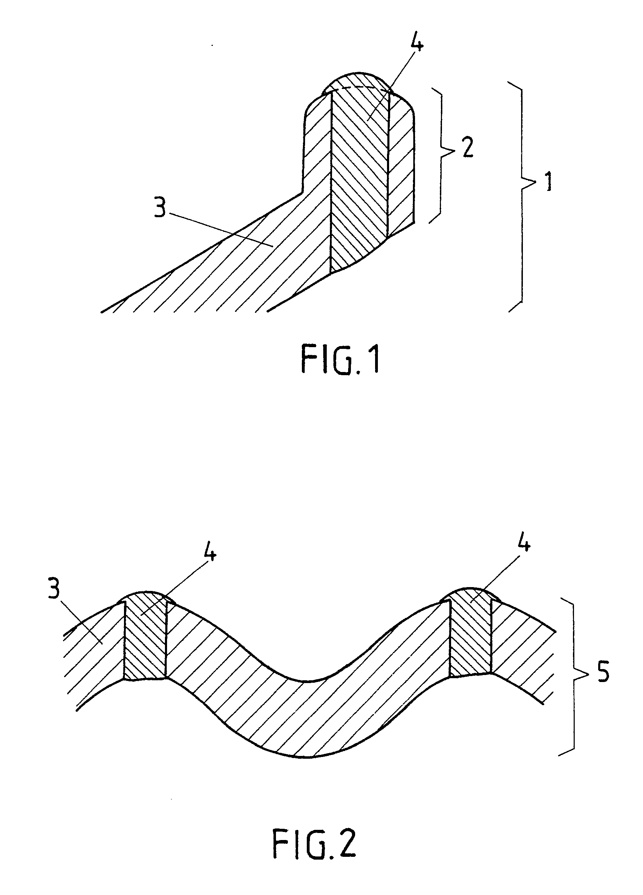

In Fig. 1 ist ein Längsschnitt durch einen Stromkollektor in Form eines Kontaktfingers dargestellt. 1 ist das stromübertragende Bauelement (Stromkollektor) in Form eines Kontaktfingers. Der eigentliche Stromkollektor besteht aus einer Vielzahl derartiger Kontaktfinger, sodass eine grosse Anzahl von Kontaktstellen pro Flächeneinheit gewährleistet ist. 2 ist der Kopf des Kontaktfingers, der mit einer in Stromrichtung liegenden Bohrung versehen ist. 3 stellt den formbestimmenden Träger aus einer Hochtemperaturlegierung dar, der sowohl die Funktion der kraftschlüssigen Berührung der Kontaktstelle (Ausübung eines Druckes) wie diejenige der Stromleitung übernimmt. In der Bohrung des Kopfes 2 des Kontaktfingers 1 befindet sich fest verankert - kraftschlüssig und elektrisch leitend verbunden - der Kontaktpfropfen 4 aus Edelmetall. Vorzugsweise wird hierfür Platin oder eine Platinlegierung verwendet.

Fig. 2 zeigt einen Längsschnitt durch einen Stromkollektor in Form eines gewellten Bandes. Der eigentliche Stromkollektor 5 besteht aus einer Vielzahl von nebeneinander angeordneten, elektrisch parallel geschalteten gewellten Bändern, welche einseitig auf ihren Wellenbergen in entsprechenden Bohrungen verankerte Kontaktpfropfen 4 aus Edelmetall tragen. 3 stellt den formbestimmenden, federnden Träger aus einer Hochtemperaturlegierung dar. Die Kontaktstellen befinden sich in den jeweiligen Scheitelpunkten der hier vorliegenden sinusähnlichen Welle. Selbstverständlich kann die Welle auch eine von der Sinusform abweichende Form, zum Beispiel Trapez-, Dreieck- oder Rechteckform haben. Letztere hängt unter anderem von der gewünschten Federkonstanten (Nachgiebigkeit bzw. Steifigkeit) dieses als Feder wirkenden Bauelements ab.

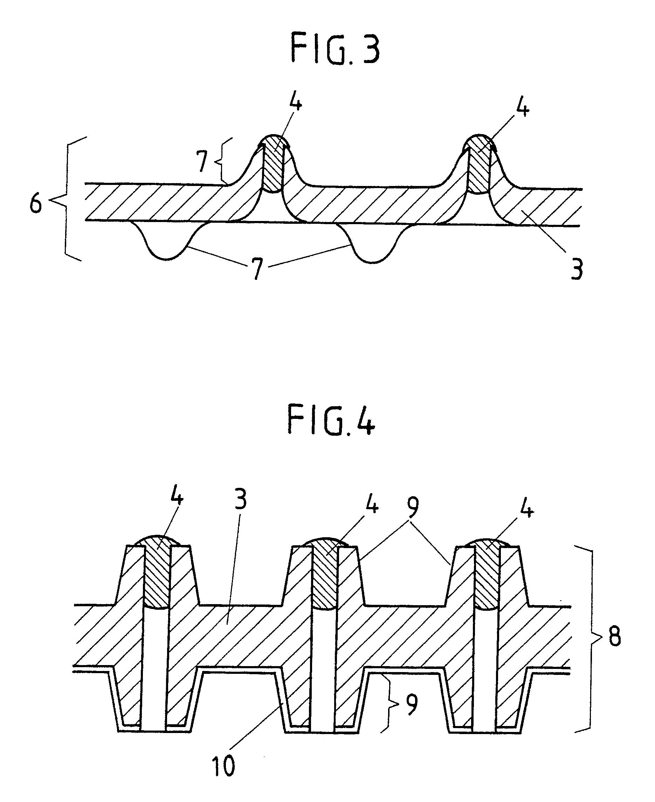

Fig. 3 bezieht sich auf einen Längsschnitt durch eine Bipolarplatte in Form eines Blechkörpers. Das aus einem Blechkörper 6 gestanzte und gedrückte stromführende Bauelement weist auf beiden Seiten Noppen 7 zur Stromübertragung auf. Auf einer Seite der Bipolarplatte sind die Noppen 7 an ihren Scheitelpunkten mit Bohrungen versehen, in denen die Kontaktpfropfen 4 aus Edelmetall sitzen. Die Noppen 7 der gegenüberliegenden Seite (Brennstoffseite) der Bipolarplatte weisen keine Kontaktpfropfen auf.

In Fig. 4 ist ein Längsschnitt durch eine Bipolarplatte in Form eines Presskörpers dargestellt. Die Bipolarplatte 8 besteht aus einem Träger 3 aus einer Hochtemperaturlegierung, welche durch Warmpressen in die entsprechende Form gebracht wurde. Der Träger 3 ist auf der Brennstoffseite mit einer Oberflächenschicht 10 abgedeckt, welche neben guter Leitfähigkeit auch einen guten Kontakt gegenüber der benachbarten Elektrode gewährleisten soll. Normalerweise wird für die Oberflächenschicht 10 Nickel oder eine Nickellegierung genommen. Die Bipolarplatte 8 weist auf beiden Seiten Erhebungen 9 auf, die als Warzen, Buckel oder Leisten ausgebildet sind. Die Erhebungen 9 haben in ihrer Mittellinie bzw. Mittelebene durchgehende Bohrungen, in denen auf einer Seite (Sauerstoffseite) nicht durchgehende Kontaktpfropfen 4 sitzen. Die Höhe der zylindrischen Kontaktpfropfen 4 hängt nur von den Forderungen des Stromüberganges 6 ab und kann unter Berücksichtigung der Leitfähigkeit umso niedriger ausfallen, je mehr Erhebungen 9 pro Flächeneinheit vorhanden sind.

Ausführungsbeispiel 1:

Siehe Fig. 1!

Das Bauelement lag in Form eines aus einem Blechkörper gefertigten Stromkollektors 1 mit zahlreichen Kontaktfingern vor. Das zu diesem Zweck als Träger 3 verwendete Blech hatte eine Dicke von 0,6 mm und bestand aus einer Nickelbasis-Superlegierung mit dem Handelsnamen Inconel 690 mit der nachfolgenden Zusammensetzung:

| Cr = | 30 Gew.-% |
| Fe = | 9,5 Gew.-% |
| C = | 0,03 Gew.-% |
| Ni = | Rest |

Das aus einer gestanzten, in die Form von zahlreichen Kontaktfingern gepresste Bauelement wurde einer Bearbeitung unterworfen. In die Köpfe 2 der Kontaktfinger wurden mit einem Laserstrahl Löcher von 200 μm Duchmesser gebohrt, deren Achsen senkrecht auf der Plattenebene standen. Diese Bohrungen wurden mit je einem Kontaktpfropfen 4 aus Edelmetall ausgefüllt. Im vorliegenden Fall wurde als Edelmetall Platin verwendet. Zu diesem Zweck wurde das Pastenverfahren angewendet.

Aus Pt-Pulver mit einer maximalen Partikelgrösse von ca. 10 μm wurde eine Paste (Schlicker) hergestellt. Das Pt-Pulver wurde mit einem Polymer-Binder in Pulverform (im vorliegenden Fall "Nafion" von DuPont) vermischt, mit Dimethylformamid angerührt und die Mischung im Autoklaven bei 150 °C in ein Gel verwandelt. Auf 1 g Pt-Pulver kamen ca. 5 g Lösung "Nafion"/Dimethylformamid. Dann wurde daraus durch Verdünnen eine viskose Lösung hergestellt. Das Gel wurde mit zusätzlich 10 g Dimethylformamid versetzt. Nun wurde das Bauelement auf 120 °C erhitzt und die Köpfe 2 der Kontaktfinger mit der erhaltenen Pt-Paste eingepinselt. Diese blieb bevorzugt in den Bohrungen der Köpfe 2 hängen. Nach wiederholtem Einpinseln wurde der Überschuss der Paste abgewischt. Dann wurde das Ganze bei einer Temperatur von 120 °C während 2 h unter Vakuum getrocknet und anschliessend bei 1150 °C unter Vakuum während 1/2 h geglüht. Dabei wurden die organischen Bestandteile zersetzt, die Reaktionsprodukte ausgetrieben und das Pt-Pulver zu einem kompakten Kontaktpfropfen 4 zusammen und in den Kopf 2 des Kontaktfingers eingesintert. Die vorstehenden, leicht gewölbten Oberflächen der Kontaktpfropfen 4 wurden durch leichtes Läppen mit einem Poliermittel auf Hochglanz poliert.

Ein Versuch bei der Betriebstemperatur von 900 °C zwischen dem Kontaktpfropfen 4 und einer mit einer Kraft von $10 \cdot 10^{-3}$ N aufgedrückten Elektrode aus keramischem Material oder aus einem Cermet ergab keinen nennenswerten elektrischen Übergangswiderstand. Bei einem Strom von ca. 30 mA pro Kontaktfinger wurde ein Spannungsabfall von der Grössenordnung 1 mV ge messen.

Ausführungsbeispiel 2:

Siehe Fig. 2!

Das Bauelement lag in Form eines Stromkollektors 5 als gewelltes Band vor. Das als Träger 3 verwendete Band hatte eine Dicke von 0,15 mm und eine Breite von 1,2 mm und bestand aus einer Nickelbasis-Superlegierung mit der Handelsbezeichnung Hastelloy X mit der nachfolgenden Zusammensetzung:

| Cr = | 22,0 Gew.-% |
|---|---|
| Co = | 1,5 Gew.-% |
| Mo = | 9,0 Gew.-% |
| W = | 0,6 Gew.-% |
| Fe = | 18,5 Gew.-% |
| Mn = | 0,5 Gew.-% |
| Si = | 0,5 Gew.-% |
| C = | 0,1 Gew.-% |
| Ni = | Rest |

Das gewellte Band wurde auf den Wellenscheiteln einer Seite in der Mitte der Breitenabmessung einer Bearbeitung unterzogen. Es wurden mit einem Laserstrahl durchgehende Löcher von 70 $\mu$m Durchmesser gebohrt. Jede dieser Bohrungen wurde mit einem Kontaktpfropfen 4 aus Edelmetall ausgefüllt. Im vorliegenden Fall wurde zu diesem Zweck Palladium verwendet.

Aus Polyvinylidenfluorid und Dimethylformamid wurde eine Lösung hergestellt. In dieser Lösung wurde Pd-Pulver mit einer maximalen Partikelgrösse von 5 $\mu$m eingerührt, bis eine viskose steife Paste gebildet wurde. Diese Paste wurde mit einer Rotationsbürste auf die mit Bohrungen versehene Seite des Stromkollektors 5 mehrmals aufgetragen, bis die Bohrungen vollständig gefüllt waren. Der Überschuss wurde abgewischt. Nun wurde das Ganze bei einer Temperatur von 200 °C während 1 h getrocknet. Danach wurde bei 1150 °C unter Argonatmosphäre während 1/2 h gesintert. Die gebildeten Kontaktpfropfen 4 wurden dar aufhin auf Hochglanz geläppt.

Ein Versuch bei einer Betriebstemperatur von 1000 °C zeigte unter einer Kraft von $10 \cdot 10^{-3}$ N pro Kontaktpfropfen 4 bei einem Strom von 15 mA pro Kontaktpfropfen 4 einen Spannungsabfall von durchschnittlich 2 mV.

Ausführungsbeispiel 3:

Siehe Fig. 2!

Das Bauelement lag in Form eines Stromkollektors 5 als gewelltes Band vor. Der Träger 3 von 0,12 mm Dicke und 0,8 mm Breite bestand aus einer Eisenbasislegierung gemäss Werkstoffnummer 1.4742 mit der Bezeichnung der Deutschen Norm DIN X10CrAl18 mit der folgenden Zusammensetzung:

| Cr = | 19,0 Gew.-% |
|---|---|
| Al = | 0,7 Gew.-% |
| Si = | 0,8 Gew.-% |
| Mn = | 0,8 Gew.-% |
| C = | 0,10 Gew.-% |
| Fe = | Rest |

Die Wellenscheitel des Bandes wurden mittels Laserstrahl mit durchgehenden Löchern von 50 $\mu$m Durchmesser versehen. Jede dieser Bohrungen wurde mit einem Kontaktpfropfen 4 aus Gold ausgefüllt.

Aus Au-Pulver mit einer maximalen Partikelgrösse von 3 $\mu$m wurde nach dem unter Beispiel 1 angegebenen Verfahren eine viskose Paste hergestellt. Mit dieser Paste wurde das gewellte Band mehrmals bestrichen, wobei diese vorwiegend die Bohrungen ausfüllte. Nach dem Entfernen des Überschusses wurde der Stromkollektor 5 zunächst bei einer Temperatur von 120 °C während 1 h unter Vakuum getrocknet und dann 1/2 h bei einer Temperatur von 980 °C geglüht. Dabei sinterten die Au-Partikel zusammen und bildeten eine innige Bindung mit dem Träger 3. Unter einer Belastung von $5 \cdot 10^{-3}$ N pro Kontaktpfropfen 4 wurde bei einer Betriebstemperatur von 900 °C unter einem Strom von 20 mA pro Kontaktpfropfen 4 ein Spannungsabfall an der Berührungsstelle von weniger als 1 mV gemessen.

Ausführungsbeispiel 4:

Siehe Fig. 3!

Das Bauelement lag in Form einer Bipolarplatte 6 als Blechkörper mit Noppen 7 vor. Das als Träger 3 verwendete Blech hatte eine Dicke von 1,2 mm. Die Noppen 7 waren ca. 1,5 mm hoch und hatten einen gegenseitigen Abstand von ca. 3 mm, einseitig in Plattenebene gemessen. Der Träger 3 bestand aus einer Nickelbasis-Superlegierung mit dem Handelsnamen Nimonic 75 mit der nachfolgenden Zusammensetzung:

| Cr = | 19,5 Gew.-% |
|------|-------------|
| Ti = | 0,4 Gew.-% |
| Fe = | 3,0 Gew.-% |
| Mn = | 0,3 Gew.-% |
| Si = | 0,3 Gew.-% |
| C = | 0,10 Gew.-% |
| Ni = | Rest |

In die durch Tiefziehen hergestellten Noppen 7 des Trägers 3 wurden mit einem Laserstrahl durchgehende Löcher von 300 $\mu$m Durchmesser gebohrt. Die Bohrungen wurden mit je einem Kontaktpfropfen 4 aus einer Edemeltall-Legierung ausgefüllt. Im vorliegenden Fall wurde eine Legierung bestehend aus 80 Gew.-% Au und 20 Gew.-% Pd verwendet. Diese Legierung hat einen gegenüber reinem Au um ca. 300 $^\circ$C erhöhten Soliduspunkt. Zum Auftragen kam ein Pastenverfahren zur Anwendung.

Au/Pd-Legierungspulver mit einer maximalen Partikelgrösse von 25 $\mu$m wurde mit Terpineol $C_{10}H_{18}O$ zu einer Paste aufgeschlämmt. Mit dieser Paste wurden die Bohrungen der Noppen 7 einseitig bestrichen. Der Überschuss wurde abgewischt und das Ganze zunächst bei 200 $^\circ$C an Luft, dann noch 1 h bei 200 $^\circ$C unter Vakuum getrocknet. Dann wurde während 1 h auf 500 $^\circ$C erhitzt, wobei die organischen Substanzen zerfielen und die Reaktionsprodukte restlos ausgetrieben wurden. Schliesslich wurde bei ca. 1050 $^\circ$C während 1/2 h gesintert.

Der Berührungswiderstand wurde unter einer Belastung von $20 \cdot 10^{-3}$ N pro Kontaktpfrcpfen 4 bei einer Betriebstemperatur von 900 $^\circ$C unter einem Strom von 30 mA pro Kontaktpfropfen 4 gemessen. Es wurde ein Spannungsabfall von ca. 1,5 mV festgestellt.


Ausführungsbeispiel 5:

Siehe Fig. 4!

Das Bauelement lag in Form einer Bipolarplatte 8 als Presskörper mit Erhebungen 9 vor. Der Träger 3 hatte eine Dicke von 1,4 mm, die Erhebungen 3 eine Höhe von 1,8 mm bei einem gegenseitigen Abstand von ca. 4 mm. Der Träger 3 bestand aus einer oxyddispersionsgehärteten Nickelbasis-Superlegierung mit dem Handelsnamen MA754 und der nachfolgenden Zusammensetzung:

| Cr = | 20,0 Gew.-% |
|------|-------------|
| Al = | 0,3 Gew.-% |
| Ti = | 0,5 Gew.-% |
| C = | 0,08 Gew.-% |
| $Y_2O_3$ = | 0,6 Gew.-% |
| Ni = | Rest |

Der Träger 3 wurde auf der Brennstoffseite mit einer Oberflächenschicht 10 aus Ni von 80 $\mu$m Dicke versehen.

In die warzenförmigen Erhebungen 9 wurden mit einem Laserstrahl durchgehende Löcher von 400 $\mu$m Durchmesser gebohrt. Jede Bohrung wurde teilweise mit einem Kontaktpfropfen 4 aus einer Edelmetall-Legierung ausgefüllt, derart, dass der sauerstoffseitige Teil der Erhebung 9 auf eine Tiefe von ca. 0,8 mm gasdicht abgschlossen wurde. Es wurde eine Legierung betehend aus 70 Gew.-% Pd und 30 Gew.-% Pt verwendet. Pd/Pt-Legierungspulver mit einer maximalen Partikelgrösse von 40 $\mu$m wurde nach dem unter Beispiel 2 erwähnten Verfahren zu einer Paste angerührt und letztere mit einer Rotationsbürste einseitig auf den Träger 3 aufgetragen. Dann wurde genau gleich wie unter Beispiel 2 angegeben verfahren.

Die Messergebnisse decken sich praktisch mit denjenigen des Beispiels 2. Durch das Zulegieren von Pt zum Pd wurde der mögliche Arbeitsbereich nach tieferen Betriebstemperaturen hin erweitert.

Ausführungsbeispiel 6:

Siehe Fig. 4!

Das Bauelement lag in Form einer Bipolarplatte 8 als Presskörper mit Erhebungen 9 vor. Der Träger 3 hattte eine Dicke von 1,2 mm, die Erhebungen 9 eine Höhe von 1,6 mm bei einem gegenseitigen Abstand von ca. 3,5 mm. Es handelte sich im vorliegenden Fall um trapezförmige Leisten mit einer Breite an der Basis von 1,4 mm und am Kopf von 1 mm. Der Träger 3 bestand aus einer oxyddispersionsgehärteten Eisenbasislegierung mit dem Handelsnamen MA956 mit der na hfolgenden Zusammensetzung:

| Cr = | 20,0 Gew.-% |
|---|---|
| Al = | 4,5 Gew.-% |
| Ti = | 0,5 Gew.-% |
| $Y_2O_3$ = | 0,5 Gew.-% |

Der Träger 3 wurde auf der Brennstoffseite mit einer Oberflächenschicht 10 aus einer Legierung mit 80 Gew.-% Ni und 20 Gew.-% Cu von 60 $\mu$m Dicke versehen.

In die leistenförmigen Erhebungen 9 wurden mit einem Laserstrahl in einem Abstand von je 3 mm durchgehende Löcher von 350 $\mu$m Durchmesser gebohrt. Die Bohrungen wurden auf der Sauerstoffseite bis zu einer Tiefe von ca. 0,7 mm mit Kontakt pfropfen 4 aus einer Edelmetall-Legierung ausgefüllt. Es wurde eine Legierung bestehend aus 60 Gew.-% Au und 40 Gew.-% Pd mit einem Soliduspunkt von ca. 1440 °C verwendet.

Au/Pd-Legierungspulver mit einer maximalen Partikelgrösse von 30 $\mu$m wurde nach dem unter Beispiel 4 angegebenen Verfahren mit Tarpineol $C_{10}H_{18}O$ zu einer Paste angerührt. Die Weiterbehandlung erfolgte nach den Verfahrensschritten gemäss Beispiel 4. Gesintert wurde unter Argonatmosphäre bei einer Temperatur von 1180 °C während 1/2 h.

Die Messresultate decken sich praktisch mit denen von Beispiel 4. Durch das Zulegieren von höheren Pd-Gehalten zum Au wurde der mögliche Arbeitsbereich nach etwas höheren Betriebstemperaturen (ca. 950 °C) hin erweitert.

Die Erfindung ist nicht auf die Ausführungsbeispiele beschränkt.

Das Bauelement (1; 5; 6; 8) zur Stromübertragung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, besteht aus einem die geometrische Form bestimmenden Träger 3 aus einer elektrisch leitenden oxydationsbeständigen Hochtemperaturlegierung ausgewählt aus einer Eisenbasis- oder Nickelbasislegierung und zahlreichen, mit letzterem fest verbundenen, elektrisch leitenden, den elektrischen Kontakt zum benachbarten Bauteil gewährleistenden Kontaktpfropfen 4 aus einem Edelmetall ausgewählt aus den Elementen Au, Pd, Pt oder einer beliebigen Legierung mindestens zweier dieser Elemente. Der Kon taktpfropfen 4 besteht vorzugsweise aus einer 80 Gew.-% Au/20 Gew.-% Pd-Legierung oder aus einer 70 Gew.-% Pd/30 Gew.-% Pt-Legierung oder aus einer 60 Gew.-% Au/40 Gew.-% Pd-Legierung.

Der Träger 3 aus einer Eisenbasis- oder Nickelbasislegierung enthält vorteilhafterweise höchstens je 0,5 Gew.-% Al und/oder Ti, ferner vorzugsweise mindestens 20 Gew.-% Cr.

In einer besonders vorteilhaften Ausführungsart besteht der Träger 3 aus einer oxyddispersionsgehärteten Eisenbasis- oder Nickelbasislegierung, die als Dispersoid 0,5 bis 2 Gew.-% $Y_2O_3$ enthält.

Das Bauelement ist in der einen Ausführungsart als Stromkollektor in Form einer Vielzahl von Kontaktfingern 1 oder von gewellten Bändern 5 oder als Bipolarplatte in Form eines Blechkörpers 6 oder eines Presskörpers 8 ausgebildet.

**Ansprüche**

1. Bauelement (1; 5; 6; 8) zur Stromübertragung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, dadurch gekennzeichnet, dass es aus einem die geometrische Form bestimmenden Träger (3) aus einer elektrisch leitenden oxydationsbeständigen Hochtemperaturlegierung ausgewählt aus einer Eisenbasis- oder Nickelbasislegierung und zahlreichen, mit letzterem fest verbundenen, elektrisch leitenden, den elektrischen Kontakt zum benachbarten Bauteil gewährleistenden Kontaktpfropfen (4) aus einem Edelmetall ausgewählt aus den Elementen Au, Pd, Pt oder einer beliebigen Legierung mindestens zweier dieser Elemente besteht.

2. Bauelement nach Anspruch 1, dadurch gekennzeichnet, dass der Kontaktpfropfen (4) aus einer 80 Gew.-% Au /20 Gew.-% Pd-Legierung oder aus einer 70 Gew.-% Pd/ 30 Gew.-% Pt-Legierung oder aus einer 60 Gew.-% Au/40 Gew.-% Pd-Legierung besteht.

3. Bauelement nach Anspruch 1, dadurch gekennzeichnet, dass der Träger (3) aus einer Eisenbaiss- oder Nickelbasislegierung besteht, die höchstens je 0,5 Gew.-% Al und/oder Ti enthält.

4. Bauelement nach Anspruch 1, dadurch gekennzeichnet, dass der Träger (3) aus einer Eisenbasis- oder Nickelbasislegierung besteht, die mindestens 20 Gew.-% Cr enthält.

5. Bauelement nach Anspruch 1, dadurch gekennzeichnet, dass der Träger (3) aus einer oxyddispersionsgehärteten Eisenbasis- oder Nickelbasislegierung besteht, die als Dispersoid 0,5 bis 2 Gew.-% $Y_2O_3$ enthält.

6. Bauelement nach Anspruch 1, dadurch gekennzeichnet, dass er als Stromkollektor in Form einer Vielzahl von Kontaktfingern (1) oder von gewellten Bändern (5) ausgebildet ist.

7. Bauelement nach Anspruch 1, dadurch gekennzeichnet, dass er als Bipolarplatte in Form eines Blechkörpers (6) oder eines Presskörpers (8) ausgebildet ist.

FIG.1

FIG.2

# FIG.3

# FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 606 762  (M. HSU)<br>* Seite 4, Absatz 2 - Seite 5, Zeile 8; Patentanspruch 1 *<br>— — — | 1,7 | H 01 M 8/02 //<br>C 22 C 38/18<br>C 22 C 19/05 |
| P,X | EP-A-0 338 823  (TOA NENRYO KOGYO K.K.)<br>* Patentansprüche 1,3,7,9; Seite 4, Zeilen 48-51; Seite 7, Zeilen 1-17; Tabelle 1 *<br>— — — | 1,3,4,7 | |
| A | TECHNISCHE RUNDSCHAU, Band 73, Nr. 26, 23. Juni 1981, Seiten 5-7, Bern, CH; H. BENNINGHOFF: "Fügen von Keramik, Glas und Metall"<br>* Seite 5, Spalte 3, Absatz 2 *<br>— — — | 2 | |
| A | US-A-3 516 865  (C.S. TEDMON)<br>* Patentansprüche 1,2,3; Spalte 2, Zeilen 24-34 *<br>— — — — — | 4 | |
| | | | **RECHERCHIERTE SACHGEBIETE (Int. Cl.5)**<br><br>H 01 M |

Der vorliegende Recherchenbericht wurde für alle Patentansprüche erstellt

| Recherchenort | Abschlußdatum der Recherche | Prüfer |
|---|---|---|
| Den Haag | 26 Oktober 90 | D'HONDT J.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument